# EUROPÄISCHE PATENTSCHRIFT

(11) **EP 2 854 954 B1**
(45) Veröffentlichungstag und Bekanntmachung des Hinweises auf die Patenterteilung: **09.05.2018**
(21) Anmeldenummer: 12710319.0
(22) Anmeldetag: 05.03.2012
(51) Int. Cl.: A62C 3/07, A62C 5/00, B60H 1/00, B60H 1/32

(54) **PERSONENKRAFTFAHRZEUG MIT EINER KLIMAANLAGE**
PASSENGER CAR HAVING AN AIR CONDITIONING SYSTEM
VOITURE PARTICULIÈRE ÉQUIPÉE D'UN CLIMATISEUR

(30) Priorität: 05.03.2011 CH 383112011
(43) Veröffentlichungstag der Anmeldung: 08.04.2015
(73) Patentinhaber: Obrist Engineering GmbH, 6890 Lustenau (AT)
(72) Erfinder: OBRIST, Frank, A-6923 Lauterach (AT); SCHMÄLZLE, Christian, A-6923 Lauterach (AT); GRAZ, Martin, A-6890 Lustenau (AT); BUSSE, Gunnar, 74343 Ochsenbach (DE)
(74) Vertreter: Kilchert, Jochen
(86) Internationale Anmeldenummer: PCT/IB2012/000468
(87) Internationale Veröffentlichungsnummer: WO 2012/120372

(56) Entgegenhaltungen:
- EP-A1- 0 675 013
- DE-A1- 19 653 781
- DE-A1-102008 010 024

## Beschreibung

Die Erfindung betrifft ein Personenkraftfahrzeug mit einer Klimaanlage, deren konstruktiven Komponenten zumindest teilweise im Motorraum des Fahrzeuges angeordnet sind und mit einer im Motorraum angeordneten, selbsttätig auslösenden Vorrichtung zur Verhinderung Brandschäden.

An Kältemittel für Klimaanlagen in Personenkraftfahrzeugen werden zahlreiche, sich teilweise widersprechende Anforderungen gestellt. Einerseits sollen ihre Eigenschaften den Betrieb der Klimaanlage mit möglichst gutem Wirkungsgrad ermöglichen, andererseits sollen sie bei ihrer Freisetzung nicht giftig sein und ausserdem umweltfreundlich sein, indem sie nicht zum Treibhauseffekt oder Abbau der Ozonschicht beitragen. Ausserdem sollen sie nicht leicht brennbar sein, um im Schadensfall am Fahrzeug, z.B. in Folge eines Crashs, die Brandgefahr gering zu halten. Hohe Sicherheitsanforderungen an den Betrieb von Personenkraftfahrzeugen verhindern deshalb bisher die Verwendung zahlreicher, einen besseren Wirkungsgrad ermöglichender Kältemittel, da sie zwar umweltschonend wären, aber zu leicht brennbar sind. Hinzu kommt, dass selbst bei Verwendung von an sich als nicht leicht brennbar geltenden Kältemitteln, durch die für den Klimakompressor erforderliche Beimischung von Schmieröl, bekannt unter den Bezeichnungen PAG, POE oder PVE, ein Betriebsmittel resultiert, das doch eine relativ leichte Brennbarkeit aufweist. Dies haben vom Anmelder an einem Fahrzeug ausgeführte Versuchsreihen mit Kältemittel bestätigt, deren Selbstentzündungstemperatur an sich im Bereich von 400 bis 600° C liegt, aber aufgrund der erforderlichen Beimischung eines für die Kompressorschmierung erforderlichen Ölanteils effektiv nur bei 200 bis 250° C liegt. Ein Ausströmen eines solchen Betriebsmittels in Folge eines Schadens an Komponenten der Klimaanlage bewirkt somit mit grosser Wahrscheinlichkeit eine Flammbildung an erwärmten Teilen einer Verbrennungskraftmaschine, insbesondere da z.B. am Auspuffkrümmer Temperaturen bis zu 1050°C möglich sind. Folglich sind solche, an sich vorteilhaften Kältemittel bei hohen Sicherheitsanforderung nicht verwendbar.

Durch die US 3,773,111 oder DE 2 216 178 wurde vorgeschlagen, eine Feuerlöscheinheit oberhalb eines möglichen Brandplatzes, wie z.B. oberhalb eines Ofens, eines Weihnachtsbaumes oder über einem Motor anzuordnen, so dass diese nach Erhitzung durch eine entstandene Flamme selbsttätig ausgelöst wird. Ein solches System kann aufgrund der bei Auslösung des Löschvorganges bereits entstandenen Flammbildung nicht sicher verhindern, dass Halogenwasserstoffverbindungen, wie z.B. Fluor-Wasserstoffverbindungen aufweisende Kältemittel aggressive bzw. giftige Gase bilden. Durch die DE 10 2004 013 208 und die US 5613564 wurden durch Sensoren, z.B. einen Crashsensor oder einen Temperatursensor auslösbare Anlagen zum Löschen von Fahrzeugbränden vorgeschlagen, wie sie durch Kabelbrände, defekte Kraftstoffsysteme, Motordefekte oder über Fremdmaterialien an der Abgasanlage entstehen können. Als Löschmittel wird z.B. ein Inertgas empfohlen. Besonders nachteilig ist es, dass solche Löschanlagen ein Rohrverteilungssystem mit einer grösseren Anzahl von Verteildüsen benötigen, so dass sich für sie grosse Gesamtabmessungen ergeben und der Einbau im Motorraum entsprechend erschwert wird. Durch die WO 2010/106381 ist es weiterhin bekannt im Motorraum eines Fahrzeuges einen Feuerlöscher anzuordnen, der bei Überhitzung der Verbrennungskraftmaschine bzw. Überschreiten einer Grenztemperatur mittels eines Temperatursensors ausgelöst wird. Das hierzu vorgeschlagene Feuerlöschmittel enthält Kaliumsalze und erzeugt einen aus einem Gas-Pulvergemisch bestehenden Löschstrahl. DE 10 2008 010024 A1 offenbart ein Personenkraftfahrzeug gemäß dem Oberbegriff des Anspruchs 1. Der Erfindung liegt die Aufgabe zugrunde, ein Personenkraftfahrzeug der eingangs genannten Art zu finden, dessen Klimaanlage und folglich auch das Fahrzeug, einen verbesserten Betriebswirkungsgrad aufweist, indem es mit einem hierfür besonders gut geeigneten Kältemittel betrieben werden kann, ohne dass dessen leichtere Brennbarkeit hierzu hindernd im Wege steht. Auch sollen durch die Erfindung, ohne Inkaufnahme von Nachteilen, besonders umweltfreundliche Kältemittel einsetzbar sein und die Brandgefahr allgemein verringert werden

Die Lösung dieser Aufgabe erfolgt erfindungsgemäss dadurch, dass die Klimaanlage ein brennbares oder durch die Beimischung eines Zusatzstoffes brennbares Kältemittel enthält und in dem Motorraum ein Aerosolerzeuger angeordnet ist, der mindest ein Auslösemittel aufweist, das aufgrund eines Druckabfalls in der Klimaanlage oder aufgrund einer drohenden Beschädigung (Crash) von Komponenten der Klimaanlage und somit vor Entstehung von Feuer selbsttätig auslösbar ist, so dass der Motorraum bei Austritt von Kältemittel aus im Motorraum angeordneten Komponenten der Klimaanlage durch Aerosol ausgefüllt wird.

Um auch Schäden an Komponenten der Klimaanlage in Folge eines Defektes am Antriebssystem des Fahrzeuges verhindern zu können, sind vorzugsweise zusätzliche, auf Erhitzung durch Feuer ansprechende Auslösemittel vorgesehen, so dass der Aerosolerzeuger weiterhin die Aufgabe eines üblichen, selbsttätig auslösenden Feuerlöschers erfüllen kann.

In weiterer vorteilhafter Ausgestaltung der Erfindung ist der Aerosolerzeuger zusätzlich von Hand auslösbar und lösbar im Motorraum befestigt, so dass er im Notfall allgemein als Feuerlöscher einsetzbar.

Für die Erleichterung des Einbaus im Motorraum des Fahrzeuges wird weiterhin ein eine besonders kompakte Bauweise aufweisender und schnell auslösbarer Aerosolerzeuger vorgeschlagen, dessen Aerosolerzeugung durch Abbrand eines Festkörpers ausgelöst wird, wie er an sich durch die DE 195 46 528 und die dort genannten Literatur bekannt ist.

Für eine optimale Verhinderung der Entzündung von ausströmendem Kältemittel und zur Vermeidung der Entstehung von gesundheitsschädlichen Feststoffpartikeln des Aerosols bestehen diese vorzugsweise aus Kaliumkarbonat (K₂CO₃).

Die sichere Wirksamkeit eines solchen, das entstehen von Feuer verhindernden Aerosolerzeugers wurde durch praktische Versuche mit Propangas (R290) bestätigt, dem eine für Kältemittel übliche Menge an Schmieröl beigemischt worden ist und das im geschlossenen Motorraum gegen einen rotglühend (ca. 800°C) erhitzten Auspuffkrümmer geleitet worden ist. In einem weiteren Versuch wurde im Motorraum mit reinem Propangas eine Flamme erzeugt und es zeigte sich, dass diese durch das Aerosol ohne Möglichkeit der Neuentflammung sofort gelöscht wird. Dies ergibt sich durch die resultierende relativ langzeitige Ausfüllung des Motorraumes durch das feuerunterdrückende Aerosol.

Aufgrund der Erfindung wird somit der gefahrlose Einsatz von Kältemitteln ermöglicht, die aufgrund der erforderlichen Beimischung von Schmieröl bereits im Bereich von 200 bis 250°C entflammen, obwohl ihre Flammtemperatur ohne diesen Zusatz im Bereich von 400 bis 600°C liegt. Hierzu gehören u.a. die folgenden Kältemittel: R50 (Methan), R290 (Propan), R600a (Butan), R170(Ethan), R152a, R510a, R717, R723, R723b, R436 a,b und R1234yf.

Weitere vorteilhafte Ausgestaltungen der Erfindung sind Gegenstand der abhängigen Patentansprüche und der folgenden Beschreibung anhand der Zeichnungen zu entnehmen. Es zeigt:
Fig.1 eine schematische Darstellung einer Aufsicht auf den vorderen Bereich eines Personenkraftfahrzeuges bei abgehobener Motorhaube,
Fig.2 eine schematische Darstellung eines Aerosolerzeugers mit mehreren in schaltplanmässiger Zuordnung dargestellten Auslösemitteln,
Fig.3 eine perspektivische Darstellung eines Aerosolerzeugung mit Mitteln für seine lösbare Befestigung im Motorraum des Fahrzeuges, angenähert im Massstab 1 : 1 und
Fig.4 einen Querschnitt durch den Aerosolerzeuger nach Fig.3, angenähert im Massstab 1: 1.

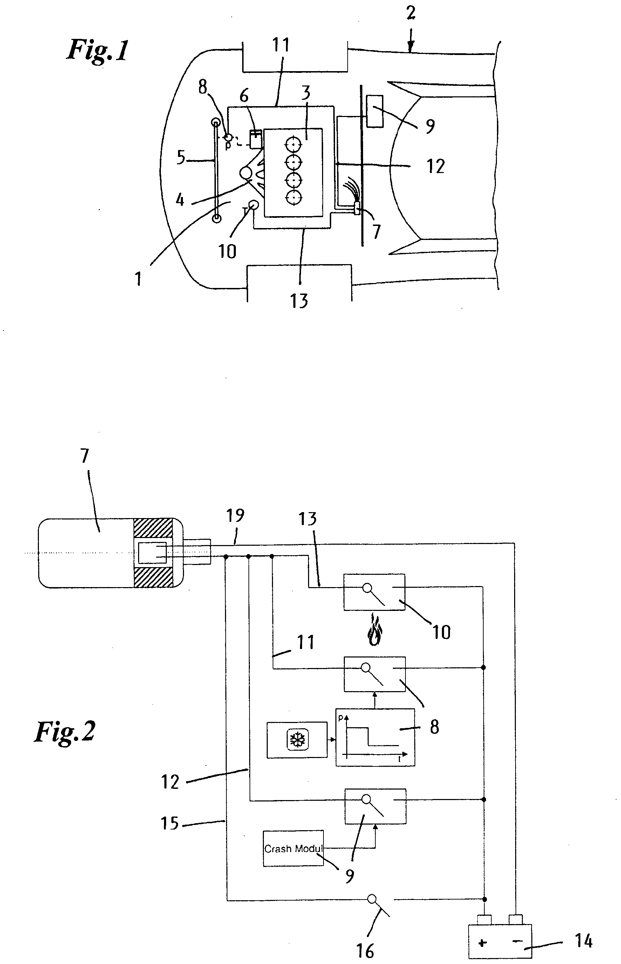

Die schematische Darstellung nach Fig.1 zeigt den Motorraum 1 eines Fahrzeuges 2, mit einem quer eingebauten 4-Zylindermotor 3, einem vor ihm angeordneten Rohrsystem eines Auspuffkrümmers 4 und einem diesem gegenüberliegend angeordneten Kondensator 5 einer für die Kühlung des Fahrgastraumes 5 des Fahrzeuges 2 bestimmten Klimaanlage.

Durch den Kondensator 5 zirkuliert ein einen guten Wirkungsgrad der Klimaanlage ermöglichendes Kältemittel, das für die Schmierung des mit dem Motor 3 gekoppelten Kompressors 6 ein Kältemittelöl mit einem Anteil von 10 bis 40 Gewichtsprozent enthält, wie es z.B. unter der Bezeichnung PAG, POE oder PAO als Kältemittelöl bekannt ist. Da ein solcher notwendiger Öl- bzw. Schmiermittelzusatz zum Kältemittel dessen Entflammbarkeit auf einen Temperaturbereich von ca. 200 bis 250°C reduziert, ist in dem Motorraum 1 ein besonders System zur Brandverhinderung eingebaut. Dieses hat einen Aerosolerzeuger 7 und vorzugsweise mehrere, mit ihm elektrisch verbundene Auslösemitteln 8 bis 10.

Da das Ausströmen von relativ leicht brennbarem Kältemittel mit einem Druckabfall in der Klimaanlage verbunden ist, besteht vorzugsweise zumindest eines der Auslösemittel für den Aerosolerzeuger 7 aus einem z.B. zwischen dem Kompressor 5 und dem Kondensator angeordneten Drucksensor 8, der bei einem durch eine Undichtigkeit in der Klimaanlage entstandenen Druckabfall ein Auslösesignal verursacht.

Da weiterhin ein Fahrzeugcrash zu einer Unterbrechung der zum Aerosolerzeuger 7 führenden, für dessen Auslösung bestimmten Schaltleitungen 9,10 führen könnte und durch einen solchen ebenfalls ein Ausströmen von Kältemittel zu erwarten ist, wird vorzugsweise zusätzlich zu dem Drucksensor 8 auch ein Crashsensor 9 vorgesehen, der mit dem serienmässig im Fahrzeug 2 vorgesehenen Crashsensor identisch sein kann.

Weiterhin kann der Aerosolerzeuger 7 zusätzlich auch die Funktion eines herkömmlichen Feuerlöschers erfüllen, indem im Motorraum 1 zusätzlich ein Temperatursensor 10 angeordnet ist, der nach Entstehung eines Feuers im Motorraum, z.B. aufgrund eines Kabelbrandes oder einer Motorüberhitzung ausgelöst wird.

Die schaltplanmässige Zuordnung der zwischen den genannten Sensoren 8 bis 10 und dem Aerosolerzeuger 7 vorgesehenen Schaltleitungen 11 bis 13 ist in Fig.2 dargestellt. Diese zeigt zusätzlich zu dem Aerosolerzeuger 7 und den Schaltleitungen 11 bis 13 eine direkt mit dem Aerosolerzeuger 7 verbundene Spannungsquelle 14 für die Auslösung seiner Zündung.

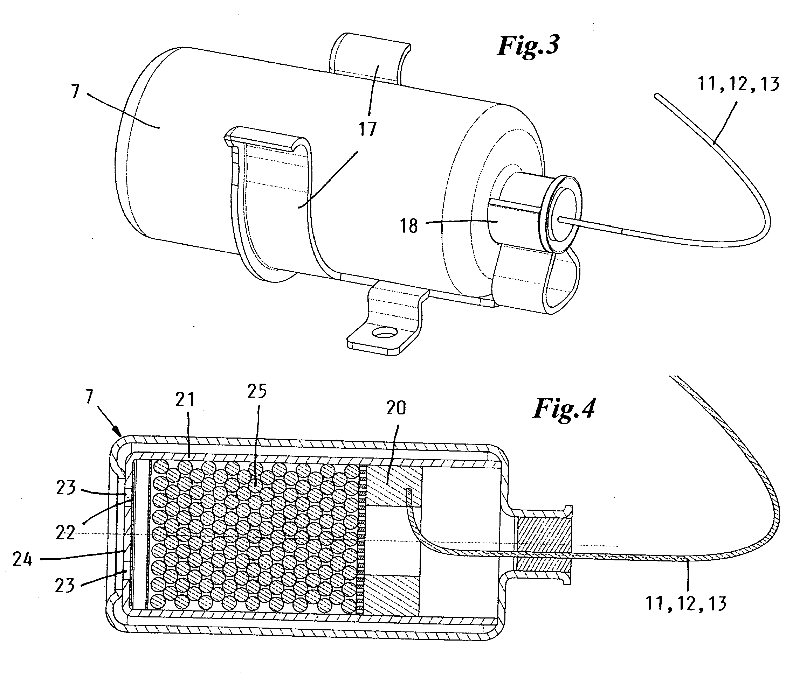

Eine weitere alternative Schaltleitung 15 des Aerosolerzeugers 7 führt zu einem, auf nicht näher dargestellte Weise, direkt an ihm angeordneten, von Hand auslösbaren Schalter 16. Ein solcher Handschalter 16 ist an einem Aerosolerzeugers 7 vorgesehen, der entsprechend der Darstellung in Fig. 3 von Hand lösbar in einer durch Federzungenpaare 17,18 gebildeten Halterung 17 im Motorraum befestigt ist. Somit lässt sich der Aerosolerzeuger 7 alternativ auch anderen Aufgaben zuführen.

Die Querschnittsdarstellung nach Fig.4 zeigt den an sich u.a. durch die DE 195 46 528 im Prinzip bekannten inneren Aufbau des Aerosolerzeugers 7. Dieser enthält einen über eine elektrische Zündleitung 19 und eine nichtdargestellte Zündpille entzündbaren Festkörper 20, der beim Abbrennen ein feuerverhinderndes oder feuerlöschendes Aerosol erzeugt. Der beim Abbrennen entstehende Gasdruck im umgebenden, dicht verschlossenen Gehäuse 21 führt zum Bersten einer Verschlussmembran 22 im Bereich von Ausströmöffnungen 23 in einer endseitigen Gehäusewand 24 des zylindrischen Aerosolerzeugers 7. Eine zwischen dem Festkörper 20 und der Verschlussmembran 22 angeordnete Füllkörperpackung 25 bewirkt eine ausreichende Abkühlung des beim Abbrennen des Festkörpers 20 entstehenden Aerosols.

Aufgrund der Erzeugung des Aerosols durch Abbrennen eines Festköpers 20 hat der Aerosolerzeuger 7 eine besonders geringe Baugrösse, durch die seine konstruktiv günstige Anordnung im wenige Freiräume aufweisenden Motorraum 1 wesentlich erleichtert wird. Durch die sich ergebende schnelle Ausbreitung des Aerosols im Motorraum 1 wird ein Einbau eines vernetzten Rohrsystems mit mehreren Löschmitteldüsen überflüssig.

## Patentansprüche

1. Personenkraftfahrzeug mit einer Klimaanlage, deren konstruktiven Komponenten (5,6) zumindest teilweise im Motorraum (1) des Fahrzeuges (2) angeordnet sind und mit einer im Motorraum (1) angeordneten, selbsttätig auslösenden Vorrichtung (7) zur Verhinderung von Brandschäden, wobei die Klimaanlage ein brennbares oder durch die Beimischung eines Zusatzstoffes brennbares Kältemittel enthält und in dem Motorraum (1) ein Aerosolerzeuger (7) angeordnet ist, der mindest ein Auslösemittel (8,9) aufweist, das aufgrund eines Druckabfalls in der Klimaanlage oder aufgrund einer drohenden Beschädigung (Crashs) von Komponenten der Klimaanlage und somit vor Entstehung von Feuer selbsttätig auslösbar ist, so dass der Motorraum (1) bei Austritt von Kältemittel aus in ihm angeordneten Komponenten (5) der Klimaanlage durch Aerosol ausgefüllt wird.

2. Personenkraftfahrzeug nach Anspruch 1, **dadurch gekennzeichnet, dass** das Kältemittel einen Schmierölanteil von 10 bis 40 Gewichtsprozent enthält.

3. Personenkraftfahrzeug nach Anspruch 1 oder 2, **dadurch gekennzeichnet, dass** zusätzliche, auf Erhitzung durch Feuer ansprechende Auslösemittel (10) vorgesehen sind.

4. Personenkraftfahrzeug nach einem der Ansprüche 1 bis 3, **dadurch gekennzeichnet, dass** ein für die Auslösung eines Airbags vorgesehener Crashsensor (9) zusätzlich als Auslöser des Aerosolerzeugers (7) ausgeführt ist.

5. Personenkraftfahrzeug nach einem der Ansprüche 1 bis 4, **dadurch gekennzeichnet, dass** der Aerosolerzeuger (7) zusätzlich von Hand auslösbar und handlich lösbar im Motorraum (1) befestigt ist.

6. Personenkraftfahrzeug nach einem der Ansprüche 1 bis 5, **dadurch gekennzeichnet, dass** der Aerosolerzeuger (7) einen durch Abbrand ein Aerosol bildenden Festkörper (20) einschliesst.

7. Personenkraftfahrzeug nach Anspruch 6, **dadurch gekennzeichnet, dass** die Feststoffpartikel des durch den Aerosolerzeuger erzeugbaren Aerosols aus Kaliumkarbonat (K₂CO₃) bestehen.

8. Personenkraftfahrzeug nach einem der Ansprüche 1 bis 7, **dadurch gekennzeichnet, dass** das Kältemittel eine Beimischung von 10 bis 40 Gewichtsprozent Schmieröl aufweist und im Bereich von 200 bis 250°C entflammbar ist.

## Claims

1. A passenger vehicle with an air-conditioning system, the constructive components (5,6) of which are at least partially arranged in the vehicle's (2) engine compartment (1) and with an automatically triggered device (7) for preventing fire damage arranged in the engine compartment (1), wherein the air-conditioning system contains a cooling agent which is flammable, or flammable on being mixed with an additive, and an aerosol generator (7) is arranged in the engine compartment (1) which has at least one triggering means (8,9), which can be automatically triggered by a drop in pressure in the air-conditioning system or by impending damage (a crash) to components of the air-conditioning system and thus prior to an outbreak of fire, so that if cooling agent escapes from components (5) of the air-conditioning system arranged in the engine compartment (1), the latter is filled by the aerosol.

2. The passenger vehicle according to claim 1, **characterised in that** the cooling agent contains 10 to 40 percent by weight of lubricating oil.

3. The passenger vehicle according to claim 1 or 2, **characterised in that** additional triggering means (10) are provided which respond to being heated up by fire.

4. The passenger vehicle according to one of claims 1 to 3, **characterised in that** a crash sensor (9) provided for triggering an airbag is additionally realised as a trigger for the aerosol generator (7).

5. The passenger vehicle according to one of claims 1 to 4, **characterised in that** the aerosol generator (7) may additionally be triggered by hand and is mounted in the engine compartment (1) so that it can be detached by hand.

6. The passenger vehicle according to one of claims 1 to 5, **characterised in that** the aerosol generator (7) comprises a solid body (20) which forms an aerosol on being burned.

7. The passenger vehicle according to claim 6, **characterised in that** the solid particles in the aerosol which can be generated by the aerosol generator (7) are made of potassium carbonate (K₂CO₃).

8. The passenger vehicle according to one of claims 1 to 7, **characterised in that** the cooling agent has an admixture of 10 to 40 percent by weight of lubricating oil and is inflammable in the range of 200 to 250°C.

## Revendications

1. Voiture particulière avec un climatiseur dont les éléments constructifs (5, 6) sont disposés au moins partiellement dans le compartiment moteur (1) du véhicule (2) et avec un dispositif à déclenchement automatique (7) disposé dans le compartiment moteur (1) pour empêcher des dommages causés par un incendie, dans laquelle le climatiseur contient un fluide frigorigène inflammable, ou inflammable par addition d'un adjuvant, et un générateur d'aérosol (7) est disposé dans le compartiment moteur (1), lequel présente au moins un moyen de déclenchement (8, 9) qui peut être déclenché automatiquement en raison d'une baisse de pression dans le climatiseur ou en raison d'une menace d'endommagement (collision) par des éléments du climatiseur, et ainsi avant la naissance d'un feu, de sorte que le compartiment moteur (1), en cas de sortie de fluide frigorigène d'éléments (5) du climatiseur disposés dans celui-ci, est rempli par un aérosol.

2. Voiture particulière selon la revendication 1, **caractérisée en ce que** le fluide frigorigène contient une part d'huile lubrifiante de 10 à 40 pour cent en poids.

3. Voiture particulière selon la revendication 1 ou 2, **caractérisée en ce que** des moyens de déclenchement (10) supplémentaires répondant à l'échauffement par le feu sont prévus.

4. Voiture particulière selon l'une des revendications 1 à 3, **caractérisée en ce qu'**un capteur de collision (9) prévu pour le déclenchement d'un airbag est additionnellement réalisé en tant que déclencheur du générateur d'aérosol (7).

5. Voiture particulière selon l'une des revendications 1 à 4, **caractérisée en ce que** le générateur d'aérosol (7) peut être additionnellement déclenché manuellement et est fixé de façon maniablement détachable dans le compartiment moteur (1).

6. Voiture particulière selon l'une des revendications 1 à 5, **caractérisée en ce que** le générateur d'aérosol (7) englobe un solide (20) formant un aérosol par combustion.

7. Voiture particulière selon la revendication 6, **caractérisée en ce que** les particules solides de l'aérosol pouvant être généré par le générateur d'aérosol se composent de carbonate de potassium (K₂CO₃) .

8. Voiture particulière selon l'une des revendications 1 à 7, **caractérisée en ce que** le fluide frigorigène présente une addition de 10 à 40 pour cent en poids d'huile lubrifiante et est inflammable dans la plage de 200 à 250°C.
